# EUROPEAN PATENT SPECIFICATION

(11) **EP 4 156 330 B1**
(45) Date of publication and mention of the grant of the patent: **10.06.2026**
(21) Application number: 22187391.2
(22) Date of filing: 28.07.2022
(51) Int. Cl.: H01M 4/24, H01M 4/74, H01M 10/28

(54) **ALKALINE STORAGE BATTERY**
ALKALISCHE SPEICHERBATTERIE
BATTERIE DE STOCKAGE ALCALINE

(30) Priority: 02.08.2021 JP 2021126707
(43) Date of publication of application: 29.03.2023
(73) Proprietor: FDK Corporation, Tokyo 108-8212 (JP)
(72) Inventor: ODAWARA, Manami, Tokyo, 108-8212 (JP); YAMANE, Tetsuya, Tokyo, 108-8212 (JP); ISHIDA, Jun, Tokyo, 108-8212 (JP)
(74) Representative: Epping - Hermann - Fischer

(56) References cited:
- EP-A1- 1 329 973
- EP-A1- 3 041 080
- US-A1- 2003 091 902

## Description

### BACKGROUND OF THE INVENTION

### Field of the Invention

The present invention relates to an alkaline storage battery, and more particularly, to an alkaline storage battery having a flat laminated structure.

### Description of the Related Art

An alkaline storage battery with a flat laminated structure is known in the related art. Document EP 3 041 080 A1 discloses a secondary battery including a positive electrode, a negative electrode, an alkaline electrolytic solution, a separator structure, and a resin container. The separator structure includes a ceramic separator composed of an inorganic solid electrolyte exhibiting hydroxide ion conductivity and optionally al resin frame and/or resin film disposed to surround the periphery of the ceramic separator.

Document EP 1 329 973 A1 discloses electrode structures that are adaptable for primary and electrically rechargeable electrochemical wafer cells.

Document US 2003/091902 A1 discloses hydrophilic collector for alkaline secondary batteries formed of a nonwoven fabric plated with nickel. The nonwoven fabric is hydrophilized by sulfonation, a gaseous fluorine treatment, or vinyl monomer grafting.

For example, Japanese Translation of PCT International Application Publication No. 2004-536430 discloses a bipolar battery including a housing, a biplate assembly, a negative pole terminal having a negative pole, and a positive pole terminal having a positive pole. In the bipolar battery, a separator is disposed between the negative pole terminal and the positive pole of the biplate assembly, and another separator is disposed between the negative pole of the biplate assembly and the positive pole terminal. Additionally, a first cell in the battery is formed by a negative pole belonging to a negative pole terminal integrated with the separator and the positive pole belonging to the biplate assembly, and a second cell in the battery is formed by a negative pole belonging to the biplate assembly integrated with the separator and a positive pole belonging to the positive pole terminal.

Incidentally, to increase collecting current in an alkaline storage battery, it is typical for the negative pole and the negative terminal to be joined by welding or the like, and similarly, for the positive pole and the positive terminal to be joined by welding or the like. Specifically, a negative pole mixture applied to a negative pole base material of the negative pole is partially stripped, and the exposed negative pole base material is connected to the negative terminal by welding or the like. Similarly, a positive pole mixture applied to a positive pole base material of the positive pole is partially stripped, and the exposed positive pole base material is connected to the positive terminal by welding or the like. In addition, the battery is charged and discharged through the negative and positive terminals. However, in an alkaline storage battery configured in this way, it is necessary to expose the positive pole base material and the negative pole base material in the battery assembly step, resulting in an increase in work man-hours which may cause a reduction in ease of assembly. Moreover, a mixture is not applied to the exposed portions of the positive pole base material and the negative pole base material, resulting in a decrease in the amount of active material that contributes to charge-discharge reactions in the battery, and the battery capacity may be lowered.

Also, in an alkaline storage battery, a belt-shaped metal material (perforated metal sheet) is typically used as the negative pole base material. In addition, the negative pole of an alkaline storage battery includes such a negative pole base material and a negative pole mixture which fills through-holes in the negative pole base material and which is supported in a layered form on the surface of the negative pole base material. Since the negative pole base material is formed from a belt-shaped metal sheet, the surface area is small compared to the positive pole base material (a nickel foam sheet, or in other words a sponge-like sheet), and the contact area between the negative pole base material and the negative pole mixture used in battery charge-discharge reactions is reduced. For this reason, in the case of ongoing battery charge-discharge reactions, the negative pole mixture contacting the negative pole base material is locally degraded (oxidized), and the resistance at the degraded portions increases. Consequently, the cycle life of the battery may be reduced even though the negative pole mixture that could contribute to battery charge-discharge reactions still remains.

### SUMMARY OF THE INVENTION

To achieve the above objectives, a first aspect of the present invention is directed to an alkaline storage battery as set out in the appended set of claims, including: an electrode group including a flat positive pole plate, a flat negative pole plate opposing the positive pole plate, and a flat separator disposed between the positive pole plate and the negative pole plate; a flat positive pole current collector that contacts the positive pole plate in the electrode group; a flat negative pole current collector that contacts the negative pole plate in the electrode group; and a pair of sealing plates that extends in the direction that the positive pole plate, the negative pole plate, and the separator in the electrode group are laminated, is respectively connected to both ends of the positive pole current collector and the negative pole current collector, and surrounds the electrode group together with the positive pole current collector and the negative pole current collector, wherein the positive pole plate of the electrode group includes a nickel-based, conductive positive pole base material having a reticulated three-dimensional framework, and a positive pole mixture that is applied to cover the whole surface of the positive pole base material, the positive pole current collector has a positive pole contact surface that contacts the whole of a positive pole outer surface which is the surface of the positive pole plate facing away from the separator, the negative pole plate of the electrode group includes a nickel-based, conductive negative pole base material having a reticulated three-dimensional framework, and a negative pole mixture that is applied to cover the whole surface of the negative pole base material, and the negative pole current collector has a negative pole contact surface that contacts the whole of a negative pole outer surface which is the surface of the negative pole plate facing away from the separator. The electrode group is configured such that the sum of the thicknesses of the positive pole plate, the negative pole plate, and the separator is equal to or greater than 90% and less than 100% of the length in the direction that the pair of sealing plates is extended.

According to a second aspect, according to the first aspect above, the positive pole plate of the electrode group is configured such that the density of positive pole active material particles contained in the positive pole mixture is equal to or greater than 2.40 g/cm³ and less than or equal to 2.75 g/cm³, and the negative pole plate of the electrode group is configured such that the density of negative pole active material particles contained in the negative pole mixture is equal to or greater than 4.50 g/cm³ and less than or equal to 5.75 g/cm³.

According to a third aspect, according to the second aspect above, the positive pole plate of the electrode group is configured such that the density of positive pole active material particles contained in the positive pole mixture is equal to or greater than 2.46 g/cm³ and less than or equal to 2.65 g/cm³, and the negative pole plate of the electrode group is configured such that the density of negative pole active material particles contained in the negative pole mixture is equal to or greater than 4.75 g/cm³ and less than or equal to 5.48 g/cm³.

A fifth aspect of the present invention is directed to an alkaline storage battery pack including: at least two of the electrode groups according to any one of the first to fourth aspects above, the at least two electrode groups being laminated in the direction that the positive pole plate, the negative pole plate, and the separator are laminated; a flat positive pole current collector that contacts the positive pole plate of one electrode group among the electrode groups, the positive pole current collector having a positive pole contact surface that contacts the whole of a positive pole outer surface which is the surface of the positive pole plate facing away from the separator; a flat negative pole current collector that contacts the negative pole plate of another electrode group among the electrode groups, the negative pole current collector having a negative pole contact surface that contacts the whole of a negative pole outer surface which is the surface of the negative pole plate facing away from the separator; a flat shared electrode plate which is disposed between respective electrode groups among the at least two electrode groups, and which contacts both the positive pole plate and the negative pole plate of the respective electrode groups adjacent to each other; and at least two pairs of sealing plates that extend in the direction that the positive pole plate, the negative pole plate, and the separator in the respective electrode groups are laminated, are respectively connected to both ends of the positive pole current collector, both ends of the shared electrode plate, and both ends of the negative pole current collector, and surround each of the electrode groups together with the positive pole current collector, the shared electrode plate, and the negative pole current collector.

### BRIEF DESCRIPTION OF THE DRAWINGS

FIG. 1 is a cross sectional view illustrating an alkaline storage battery according to an exemplary embodiment in a single-cell structure;
FIG. 2 is a plan view illustrating a positive pole plate and a positive pole current collector forming the alkaline storage battery according to the exemplary embodiment;
FIG. 3 is a plan view illustrating a negative pole plate and a negative pole current collector forming the alkaline storage battery according to the exemplary embodiment;
FIG. 4 is a cross sectional view illustrating a battery pack in which single cells of the alkaline storage battery according to the exemplary embodiment are laminated;
FIG. 5 is a table illustrating the dimension, the internal resistance after aging, and capacity measurement results for alkaline storage batteries according to embodiments and prototypes;
FIG. 6 is a graph illustrating the capacity measurement results illustrated in FIG. 5, and illustrates the capacity measurement results under predetermined measurement conditions; and
FIG. 7 is a graph illustrating the capacity measurement results of alkaline storage batteries according to embodiments and prototypes, and illustrates the capacity measurement results under measurement conditions different from those of the capacity measurement illustrated in FIG. 6.

### DETAILED DESCRIPTION OF THE INVENTION

Hereinafter, a nickel-metal hydride secondary battery 10 (hereinafter also simply referred to as the "battery 10") as one example of a battery embodying the present invention and an embodiment of a battery pack 20 including the battery 10 is described. Note that the battery 10 may be any battery that uses an alkaline solution as an electrolytic solution, and may also be a nickel-cadmium secondary battery, for example.

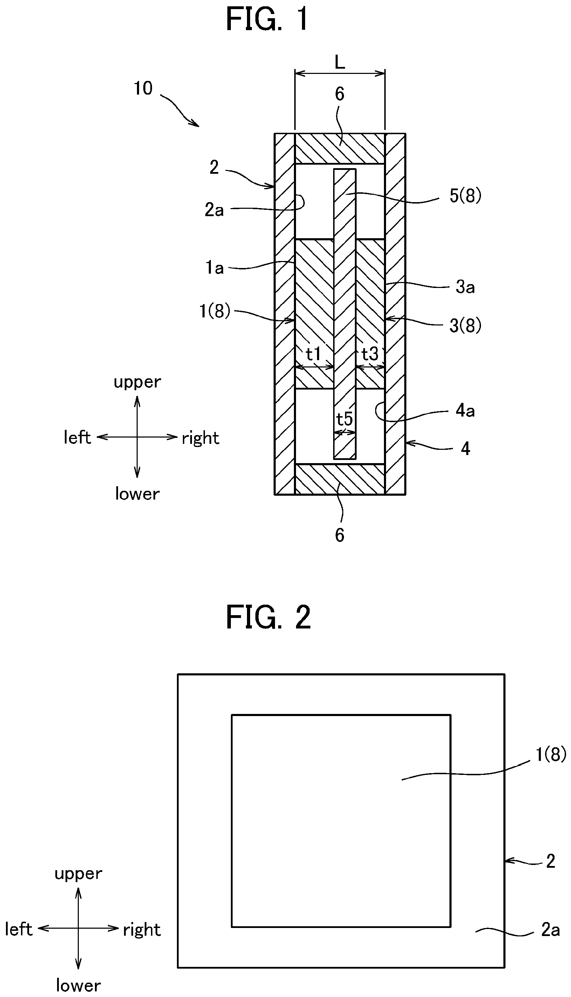

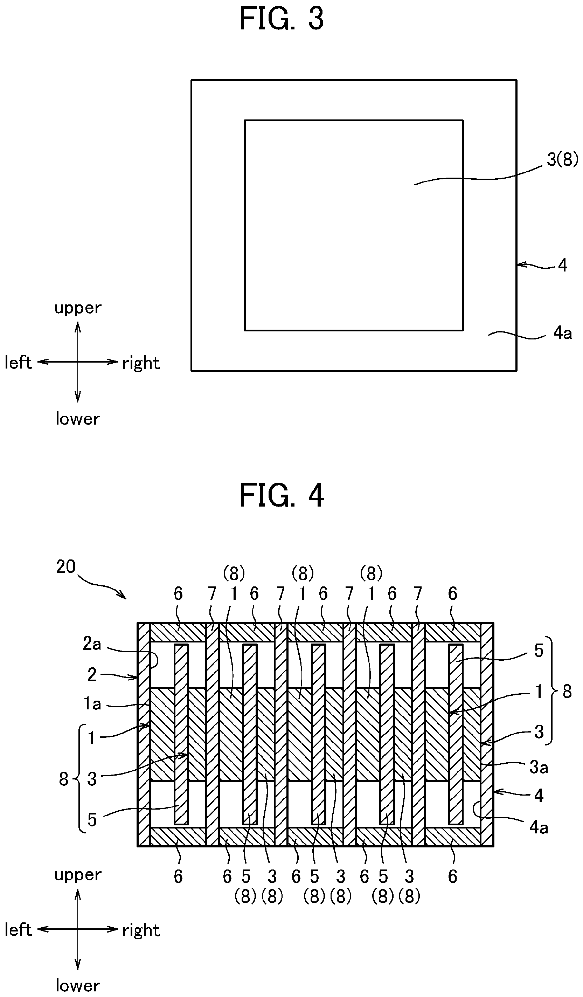

FIG. 1 is a cross sectional view illustrating the nickel-metal hydride secondary battery 10 according to the exemplary embodiment in a single-cell structure. FIG. 2 is a plan view illustrating a positive pole plate 1 and a positive pole current collector 2 forming the battery 10 according to the exemplary embodiment. FIG. 3 is a plan view illustrating a negative pole plate 3 and a negative pole current collector 4 forming the battery 10 according to the exemplary embodiment. FIG. 4 is a cross sectional view illustrating a battery pack 20 in which single cells of the battery 10 according to the exemplary embodiment are laminated.

For the sake of convenience, in the battery 10 illustrated in FIG. 1, "left" is defined to be the side on which the positive pole current collector 2 is disposed, "right" is defined to be the side on which the negative pole current collector 4 is disposed, "upper" and "lower" are defined to be the sides on which a pair of sealing plates 6 is disposed, and the direction perpendicular to the left-right direction and the upper-lower direction described above is defined to be the front-rear direction. Hereinafter, "front", "rear", "left", "right", "upper", and "lower" indicated in each diagram are all based on the above definitions.

### <Nickel-metal hydride secondary battery 10>

As illustrated in FIG. 1, the nickel-metal hydride secondary battery 10 according to the present embodiment is provided with an electrode group 8, a flat positive pole current collector 2, a flat negative pole current collector 4, and a pair of sealing plates 6. A predetermined quantity of an alkaline electrolytic solution (not illustrated) is poured into the battery 10. The alkaline electrolytic solution impregnates the electrode group 8 and promotes electrochemical reactions (charge-discharge reactions) during charging and discharging between the positive pole plate 1 and the negative pole plate 3 described later. Preferably, an electrolytic solution containing at least one of KOH, NaOH, or LiOH as the solute is used for the alkaline electrolytic solution. The battery 10 is to be used broadly as a backup power supply, and is used for a variety of purposes, such as in a power supply and demand control system, for example.

### <Positive pole current collector 2, negative pole current collector 4>

As illustrated in FIGS. 1 and 2, the positive pole current collector 2 is a flat member that extends in the upper-lower and front-rear directions, and is configured to contact the positive pole plate 1 in the electrode group 8. Specifically, the positive pole current collector 2 includes a positive pole contact surface 2a facing the right side. When the battery 10 is in the assembled structure, the positive pole contact surface 2a contacts the whole of a positive pole outer surface 1a which is the surface of the positive pole plate 1 facing away from the separator 5. The negative pole current collector 4 is a flat member that extends in the upper-lower and front-rear directions, and is configured to contact the negative pole plate 3 in the electrode group 8. Specifically, the negative pole current collector 4 includes a negative pole contact surface 4a facing the left side. When the battery 10 is in the assembled structure, the negative pole contact surface 4a contacts the whole of a negative pole outer surface 3a which is the surface of the negative pole plate 3 facing away from the separator 5. The positive pole current collector 2 and the negative pole current collector 4 are disposed apart from each other in the left-right direction, such that the positive pole contact surface 2a and the negative pole contact surface 4a oppose one another. Specifically, the positive pole contact surface 2a and the negative pole contact surface 4a extend in parallel or substantially in parallel with each other. The positive pole current collector 2 and the negative pole current collector 4 may be any metal with conductive properties, and are formed from a nickel-plated steel sheet, for example.

### <Pair of sealing plates 6>

As illustrated in FIG. 1, the pair of sealing plates 6 is a pair of flat members extending in the direction (that is, the left-right direction) that the positive pole plate 1, the negative pole plate 3, and the separator 5 in the electrode group 8 are laminated. Here, the length of the pair of sealing plates 6 in the left-right direction is denoted by L (FIG. 1). In addition, the pair of sealing plates 6 is respectively connected to both ends of the positive pole current collector 2 and the negative pole current collector 4, and surrounds the electrode group 8 together with the positive pole current collector 2 and the negative pole current collector 4. Specifically, the pair of sealing plates 6 is supported by the inner surfaces on the upper side of the positive pole current collector 2 and the negative pole current collector 4 and also supported by the inner surfaces on the lower side of the positive pole current collector 2 and the negative pole current collector 4. With this arrangement, as illustrated in FIG. 1, the pair of sealing plates 6, the positive pole current collector 2, and the negative pole current collector 4 form a predetermined housing space for containing the electrode group 8. The pair of sealing plates 6 is formed from a material with insulating properties.

### <Electrode group 8>

As illustrated in FIG. 1, the electrode group 8 is disposed between the positive pole current collector 2 and the negative pole current collector 4. Specifically, the electrode group 8 includes a flat positive pole plate 1, a flat negative pole plate 3 opposing the positive pole plate 1, and a flat separator 5 disposed between the positive pole plate 1 and the negative pole plate 3. Note that the description herein regards the case where a single electrode group 8 is provided, or in other words, the battery 10 is in a single-cell structure. The electrode group 8 is configured such that the sum (t1 + t3 + t5) of the thicknesses of the positive pole plate 1, the negative pole plate 3, and the separator 5 is equal to or greater than 90% and less than 100% of the length L in the direction (left-right direction) that the pair of sealing plates 6 is extended. Here, t1 represents the thickness of the positive pole plate 1 in the left-right direction, t3 the thickness of the negative pole plate 3 in the left-right direction, and t5 the thickness of the separator 5 in the left-right direction.

### <Positive pole plate 1>

The positive pole plate 1 of the electrode group 8 includes a nickel-based, conductive positive pole base material (not illustrated) having a reticulated three-dimensional framework, and a positive pole mixture (not illustrated) that is applied to cover the whole surface of the positive pole base material. The positive pole base material is a conductive member having a porous structure, and the positive pole mixture is supported on the positive pole base material. The positive pole base material is what is called a nickel foam sheet (that is, a sponge-like sheet), and therefore the positive pole mixture is interspersed throughout the whole part in the direction of the thickness of the positive pole base material. As illustrated in FIG. 1, the whole of the positive pole outer surface 1a, which is the surface of the positive pole plate 1 facing away from the separator 5, contacts the positive pole contact surface 2a of the positive pole current collector 2. The positive pole outer surface 1a of the positive pole plate 1 is the portion facing the left side, and is the surface that is back-to-back with the surface of the positive pole plate 1 opposing the separator 5 (the surface facing the right side). The positive pole outer surface 1a opposes the positive pole contact surface 2a of the positive pole current collector 2. Note that the positive pole plate 1 may be of any size not exceeding the separator 5, and the size is not limited to the illustrations in FIGS. 1 and 2.

For the positive pole base material, a nickel foam sheet can be used, for example. The positive pole mixture contains positive pole active material particles and a binder. A positive pole additive is also added to the positive pole mixture, as necessary. The positive pole plate 1 of the electrode group 8 is configured such that the density of the positive pole active material particles contained in the positive pole mixture is equal to or greater than 2.40 g/cm³ and less than or equal to 2.75 g/cm³. Here, the density of the positive pole active material particles is calculated according to "mass of positive pole mixture [g] ÷ (height of positive pole plate 1 [cm] × length of positive pole plate 1 [cm] × thickness of positive pole plate 1 [cm] - mass of nickel foam (positive pole base material) [g] ÷ specific gravity of nickel [g/cm³])". The above binder works to bind the positive pole active material particles to each other and bind the positive pole active material particles to the positive pole base material. Here, carboxymethyl cellulose, methyl cellulose, a polytetrafluoroethylene (PTFE) dispersion, or an hydroxypropyl cellulose (HPC) dispersion can be used as the binder, for example. Also, examples of the positive pole additive include zinc oxide and cobalt hydroxide. For the positive pole active material particles, nickel hydroxide particles typically used for nickel-metal hydride secondary batteries are used. Preferably, higher-order nickel hydroxide particles are adopted as the nickel hydroxide particles. The positive pole active material particles as described above are manufactured according to a manufacturing method typically used for nickel-metal hydride secondary batteries.

The positive pole plate 1 can be manufactured as follows, for example. First, after preparing a positive pole mixture slurry containing positive pole active material particles, water, and a binder, a nickel foam sheet, for example, that acts as the positive pole base material is filled with prepared positive pole mixture slurry. Thereafter, a drying step is performed, and the nickel foam sheet filled with nickel hydroxide particles and the like is cut after adjusting the positive electrode active material particles to a predetermined density by rolling.

### <Negative pole plate 3>

The negative pole plate 3 of the electrode group 8 includes a nickel-based, conductive negative pole base material (not illustrated) having a reticulated three-dimensional framework, and a negative pole mixture (not illustrated) that is applied to cover the whole surface of the negative pole base material. The negative pole base material is a conductive member having a porous structure, and the negative pole mixture is supported on the negative pole base material. The negative pole base material is what is called a nickel foam sheet (that is, a sponge-like sheet), and therefore the negative pole mixture is interspersed throughout the whole part in the direction of the thickness of the negative pole base material. As illustrated in FIG. 1, the whole of the negative pole outer surface 3a, which is the surface of the negative pole plate 3 facing away from the separator 5, contacts the negative pole contact surface 4a of the negative pole current collector 4. The negative pole outer surface 3a of the negative pole plate 3 is the portion facing the right side, and is the surface that is back-to-back with the surface of the negative pole plate 3 opposing the separator 5 (the surface facing the left side). The negative pole outer surface 3a opposes the negative pole contact surface 4a of the negative pole current collector 4. Note that the negative pole plate 3 may be of any size not exceeding the separator 5, and the size is not limited to the illustrations in FIGS. 1 and 2.

For the negative pole base material, a nickel foam sheet can be used, for example. The negative pole mixture contains hydrogen-occluding alloy particles that can occlude and release hydrogen as negative pole active material particles, a conductive agent, a binder, and a negative pole auxiliary agent. The negative pole plate 3 of the electrode group 8 is configured such that the density of the negative pole active material particles contained in the negative pole mixture is equal to or greater than 4.50 g/cm³ and less than or equal to 5.75 g/cm³. Here, the density of the negative pole active material particles is calculated according to "mass of negative pole mixture [g] ÷ (height of negative pole plate 3 [cm] × length of negative pole plate 3 [cm] × thickness of negative pole plate 3 [cm] - mass of nickel foam (negative pole base material) [g] ÷ specific gravity of nickel [g/cm³])". The above binder works to bind the hydrogen-occluding alloy particles, conductive agent, and the like to each other and at the same time bind the hydrogen-occluding alloy particles, conductive agent, and the like to the negative pole base material. The binder here is not particularly limited, and for example, a binder typically used for a nickel-metal hydride secondary battery, such as a hydrophilic or hydrophobic polymer or carboxymethyl cellulose, can be used. Also, styrene-butadiene rubber, sodium polyacrylate, or the like can be used as the negative pole auxiliary agent. The hydrogen-occluding alloy in the hydrogen-occluding alloy particles is not particularly limited, and preferably, a typical alloy used in nickel-metal hydride secondary batteries is used. A conductive agent typically used for the negative pole in nickel-metal hydride secondary batteries is used as the conductive agent. For example, carbon black or the like is used.

The negative pole plate 3 can be manufactured as follows, for example. First, a hydrogen-occluding alloy powder which is an aggregate of hydrogen-occluding alloy particles as described above, a conductive agent, a binder, and water are prepared and kneaded to form a paste of the negative pole mixture. The obtained paste is applied to the negative pole base material and dried. Thereafter, the density of the hydrogen-occluding alloy particles is adjusted to a predetermined value through a rolling process in which the negative pole is rolled as a whole, and the negative pole plate 3 is manufactured.

### <Separator 5>

As illustrated in FIG. 1, the separator 5 is disposed between the positive pole plate 1 and the negative pole plate 3. Specifically, the separator 5 is a flat member formed to have a greater area than the positive pole plate 1 and the negative pole plate 3. In other words, the positive pole plate 1 and the negative pole plate 3 oppose each other across the separator 5. Note that the material of the separator 5 is not particularly limited insofar as the material is usable as a separator for an alkaline storage battery, and for example, a polyamide fiber nonwoven fabric with hydrophilic functional groups, a polyolefin fiber nonwoven fabric such as polyethylene or polypropylene with hydrophilic functional groups, or the like can be used.

The electrode group 8 manufactured in this way is housed in the housing space formed by the pair of sealing plates 6, the positive pole current collector 2, and the negative pole current collector 4. Next, pressure is applied in the direction (left-right direction) bringing the positive pole current collector 2 and the negative pole current collector 4 closer to each other. Consequently, the positive pole plate 1 is pressed against the positive pole current collector 2 by a predetermined pressure, and the negative pole plate 3 is pressed against the negative pole current collector 4 by a predetermined pressure. As a result, electrical continuity is secured between the positive pole plate 1 and the positive pole current collector 2, and electrical continuity is secured between the negative pole plate 3 and the negative pole current collector 4. Next, a predetermined quantity of an alkaline electrolytic solution is poured into the housing space and the housing space is sealed to obtain the battery 10. The battery 10 is subjected to an initial activation process and put into a usable structure.

### <Battery pack 20>

Next, the battery pack 20 according to the exemplary embodiment is described with reference to FIG. 4. The battery pack 20 differs from the battery 10 described above in that a shared electrode plate 7 described later is provided between two electrode groups 8. Hereinafter, portions of the configuration having the same or similar functions as the battery 10 described above are denoted with the same signs as battery 10 and further description thereof are omitted, while only the portions that differ are described.

As illustrated in FIG. 4, the alkaline storage battery pack 20 includes at least two electrode groups 8, the positive pole current collector 2, the negative pole current collector 4, the shared electrode plate 7, and the pair of sealing plates 6. Specifically, the battery pack 20 is configured such that the space formed by the positive pole current collector 2, the negative pole current collector 4, and the pair of sealing plates 6 is partitioned by a plurality of shared electrode plates 7, and an electrode group 8 is housed in each of the partitioned spaces.

As illustrated in FIG. 4, in the battery pack 20, at least two electrode groups 8 are provided. Note that in the present embodiment, five electrode groups 8 are provided. The respective electrode groups 8 are laminated in the direction (that is, the left-right direction) that the positive pole plate 1, the negative pole plate 3, and the separator 5 are laminated.

As illustrated in FIG. 4, the positive pole current collector 2 is formed into a flat shape and contacts the positive pole plate 1 of one (namely, the leftmost) electrode group 8 among the electrode groups 8. Specifically, the positive pole contact surface 2a of the positive pole current collector 2 contacts the whole of the positive pole outer surface 1a which is the surface of the positive pole plate 1 facing away from the separator 5. In addition, the negative pole current collector 4 is formed into a flat shape and contacts the negative pole plate 3 of another (namely, the rightmost) electrode group 8 among the electrode groups 8. Specifically, the negative pole contact surface 4a of the negative pole current collector 4 contacts the whole of the negative pole outer surface 3a which is the surface of the negative pole plate 3 facing away from the separator 5.

As illustrated in FIG. 4, the shared electrode plate 7 is formed into a flat shape and is disposed between respective electrode groups 8 among the plurality of electrode groups 8. Specifically, the shared electrode plate 7 is disposed between two electrode groups 8 to contact both the positive pole plate 1 and the negative pole plate 3 of the electrode groups 8 adjacent on either side in the left-right direction. The shared electrode plate 7 is covered with a nickel plating layer, and is a member that is also referred to as a bipolar plate. In other words, the shared electrode plate 7 connects the plurality of electrode groups 8 in series, and the surfaces on either side act as a positive pole and a negative pole, respectively.

As illustrated in FIG. 4, the pair of sealing plates 6 extends in the direction (that is, the left-right direction) that the positive pole plate 1, the negative pole plate 3, and the separator 5 in each electrode group 8 are laminated. In addition, the pair of sealing plates 6 is respectively connected to both the upper and lower ends of the positive pole current collector 2, both the upper and lower ends of the shared electrode plate 7, and both the upper and lower ends of the negative pole current collector 4. Moreover, the pair of sealing plates 6 surrounds each of the electrode groups 8 together with the positive pole current collector 2, the shared electrode plate 7, and the negative pole current collector 4. Specifically, one pair of sealing plates 6 surrounds the electrode group 8 positioned on the left side together with the positive pole current collector 2 and the shared electrode plate 7. Also, another pair of sealing plates 6 surrounds the electrode group 8 positioned on the right side together with the negative pole current collector 4 and the shared electrode plate 7. Furthermore, a pair of sealing plates 6 surrounds one of the electrode groups 8 together with two mutually opposing shared electrode plates 7. The battery pack 20 configured in this way may also have 15 electrode groups 8 arranged in series in the left-right direction, for example.

Next, the action and effect of the battery 10 and the battery pack 20 according to the exemplary embodiment are described. As described above, according to the battery 10 and the battery pack 20 according to the exemplary embodiment, the positive pole plate 1 includes the positive pole base material formed from a nickel foam sheet and the positive pole mixture applied to cover the whole surface of the positive pole base material, and the positive pole current collector 2 includes the positive pole contact surface 2a that contacts the whole of the positive pole outer surface 1a which is the surface of the positive pole plate 1 facing away from the separator 5. Also, the negative pole plate 3 includes the negative pole base material formed from a nickel foam sheet and the negative pole mixture applied to cover the whole surface of the negative pole base material, and the negative pole current collector 4 includes the negative pole contact surface 4a that contacts the whole of the negative pole outer surface 3a which is the surface of the negative pole plate 3 facing away from the separator 5. In this way, the positive pole plate 1 described above is coated with the positive pole mixture to cover the whole surface of the positive pole base material, and contacts the positive pole current collector 2 with the whole of the positive pole outer surface 1a without stripping the positive pole mixture. Similarly, the negative pole plate 3 described above is coated with the negative pole mixture to cover the whole surface of the negative pole base material, and contacts the negative pole current collector 4 with the whole of the negative pole outer surface 3a without stripping the negative pole mixture. For this reason, it is not necessary to expose the positive pole base material and the negative pole base material in the assembly step for the battery 10 and the battery pack 20, and therefore the number of work man-hours can be decreased and the ease of assembly can be improved. Moreover, since the positive pole base material and the whole area of negative pole base material are coated by mixtures, the amount of active material that contributes to charge-discharge reactions in the battery 10 and the battery pack 20 is increased compared to pole plates of the related art configured by stripping portions of the mixtures, and by extension, the battery capacity can be increased.

Furthermore, the above positive pole base material and negative pole base material are both formed using a conductive material formed from a nickel foam sheet. For this reason, the above negative pole base material has a larger surface area compared to a negative pole base material of the related art formed from a belt-shaped metal sheet (perforated metal sheet), and by extension, there is an increased contact area between the negative pole base material and the negative pole mixture used for charge-discharge reactions in the battery 10 and the battery pack 20. Therefore, even in the case of ongoing charge-discharge reactions in the battery 10 and the battery pack 20, a condition in which the negative pole mixture contacting the negative pole base material is locally degraded (oxidized) is avoided, and a condition in which the resistance increases locally is avoided. In other words, conductivity can be maintained inside the battery and the internal resistance can be lowered. With this arrangement, the negative pole mixture that could contribute to charge-discharge reactions in the battery 10 and the battery pack 20 can be consumed uniformly, and the cycle life of the battery 10 and the battery pack 20 can be improved. Furthermore, using a conductive negative pole base material formed from a nickel foam sheet also keeps the negative pole mixture from falling off the negative pole base material as a powder, and the cycle life of the battery 10 and the battery pack 20 can be improved.

According to the battery 10 and the battery pack 20 according to the exemplary embodiment, the positive pole plate 1 of the electrode group 8 is configured such that the density of the positive pole active material particles contained in the positive pole mixture is equal to or greater than 2.40 g/cm³ and less than or equal to 2.75 g/cm³. Also, the negative pole plate 3 of the electrode group 8 is configured such that the density of the negative pole active material particles contained in the negative pole mixture is equal to or greater than 4.50 g/cm³ and less than or equal to 5.75 g/cm³. In this way, by making the active material particles of the positive pole plate 1 have a density equal to or greater than 2.40 g/cm³ and less than or equal to 2.75 g/cm³, a positive pole plate 1 that is flexible and highly permeable to the electrolytic solution can be obtained. With this arrangement, the electrolytic solution permeates the positive pole plate 1 more easily, and the internal resistance can be lowered through improved liquid circulation. Also, the above positive pole plate 1 can maintain relatively large voids, and therefore has an advantage in that even if the positive pole active material expands during repeated charging and discharging, the voids in the positive pole plate 1 are filled first, and the thickness of the positive pole plate 1 does not increase readily. On the other hand, by making the active material particles of the negative pole plate 3 have a density equal to or greater than 4.50 g/cm³ and less than or equal to 5.75 g/cm³, there is an advantage in that, because of alloy cracking due to rolling, the activity of the positive pole plate 1 is improved, the internal resistance is lowered, and higher output can be achieved.

In this way, by preparing the positive pole plate 1 and the negative pole plate 3 to have active material densities in the above ranges, the electrolytic solution is sufficiently retained by the electrode group 8 in the battery 10, increases in internal pressure and overvoltage are suppressed to a greater degree than a battery 10 formed from a positive pole plate 1 and a negative pole plate 3 manufactured outside the above ranges, and an improvement in current-collecting performance can be achieved. Here, it is necessary to retain a certain quantity of the electrolytic solution inside the pole plate, particularly the positive pole plate, to lower the internal resistance of the battery. For this reason, certain voids are typically necessary inside the positive pole plate to secure the quantity of electrolytic solution retained in the positive pole plate. However, in the configuration of the exemplary embodiment that collects current by contacting the positive pole current collector 2 and the negative pole current collector 4 without stripping each of the positive pole plate 1 and the negative pole plate 3, if the densities of the positive pole plate 1 and the negative pole plate 3 are lowered to increase the voids, the contact area with respect to the positive pole current collector 2 and the negative pole current collector 4 is reduced, and the resistance may increase due to poor contact. In addition, lowering the density in this way also causes burrs to form more readily during manufacturing, and a short circuit may occur. On the other hand, if the density is increased too much, the liquid circulation of the electrolytic solution inside the electrode group 8 worsens, and consequently the resistance may increase and overvoltage may occur in this case, too. In view of this point, by preparing the positive pole plate 1 and the negative pole plate 3 to have active material densities in the above ranges like the exemplary embodiment, it is possible to both ensure voids in the pole plates and achieve current-collecting performance, which could not be achieved simultaneously in a battery with a flat laminated structure of the related art.

Note that if the density of the active material particles in the positive pole plate 1 exceeds 2.75 g/cm³, the liquid circulation of the electrolytic solution may worsen and higher internal resistance may conceivably occur, and therefore it is necessary to set an upper limit of 2.75 g/cm³ on the density of the active material particles in the positive pole plate 1. Also, if the density of the active material particles in the positive pole plate 1 falls below 2.40 g/cm³, the thickness of the positive pole plate 1 increases, and as a result, the sum of the thicknesses of the positive pole plate 1, the negative pole plate 3, and the separator 5 exceeds the dimension of the length L in the direction that the pair of sealing plates 6 is extended, and therefore it is necessary to set a lower limit of 2.40 g/cm³ on the density of the active material particles in the positive pole plate 1. Also, if the density of the active material particles in the negative pole plate 3 exceeds 5.75 g/cm³, stretching increases significantly during rolling, and therefore it is necessary to set an upper limit of 5.75 g/cm³ on the density of the active material particles in the negative pole plate 3 due to manufacturing limits. Also, if the density of the active material particles in the negative pole plate 3 falls below 4.50 g/cm³, the thickness of the negative pole plate 3 increases, and as a result, the sum of the thicknesses of the positive pole plate 1, the negative pole plate 3, and the separator 5 exceeds the dimension of the length L in the direction that the pair of sealing plates 6 is extended, and therefore it is necessary to set a lower limit of 4.50 g/cm³ on the density of the active material particles in the negative pole plate 3. More preferably, the density of the active material particles in the positive pole plate 1 is set to 2.46-2.65 g/cm³ and the density of the active material particles in the negative pole plate 3 is set to 4.75-5.48 g/cm³. The above values are derived on the basis of dimensional value data from embodiments 1 to 3 described later in which an increase in internal resistance is suppressed and characteristics close to the design value are obtained for the discharge capacity.

Also, if the thickness (t1 + t3 + t5) of the electrode group 8 is equal to or greater than 100% of the length L of the sealing plates 6, the battery 10 and the battery pack 20 cannot be sealed, and the electrolytic solution may leak. Also, since reactions to consume the gas are not performed inside the electrode group 8, the accumulation of reserve at the negative pole plate 3 may shorten the life of the battery 10 and the battery pack 20. On the other hand, if the thickness (t1 + t3 + t5) of the electrode group 8 is less than 90% of the length L of the sealing plates 6, current collecting failure may be caused due to voids being formed between the positive pole plate 1 and the positive pole current collector 2 and between the negative pole plate 3 and the negative pole current collector 4, and by extension, the internal resistance may increase and overvoltage may occur. In view of this point, according to the battery 10 and the battery pack 20 according to the exemplary embodiment, the electrode group 8 is configured such that the sum (t1 + t3 + t5) of the thicknesses of the positive pole plate 1, the negative pole plate 3, and the separator 5 is equal to or greater than 90% and less than 100% of the length L in the direction (left-right direction) that the pair of sealing plates 6 is extended. Consequently, a battery 10 and a battery pack 20 can be provided with improved cycle life by suppressing leakage of the electrolytic solution. Furthermore, contact is reliably achieved between the positive pole plate 1 and the positive pole current collector 2 and between the negative pole plate 3 and the negative pole current collector 4, thereby improving poor current collectability, and by extension, increases in internal resistance and overvoltage can be avoided. Furthermore, even if the size of the housing forming the battery 10 and the battery pack 20 is changed, the same electrode group 8 can be used, thereby contributing to a reduction in manufacturing costs.

### 1. Battery preparation

### Embodiment 1

### (1) Preparation of positive pole plate 1

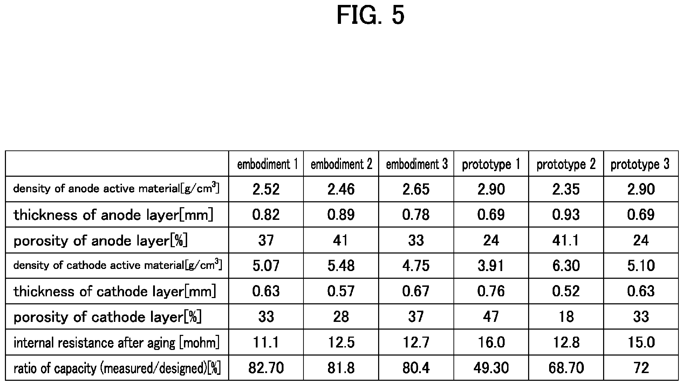

To improve conductivity, the positive pole plate 1 was prepared by filling nickel foam having a surface density (grammage) of 575 g/m² with a Ni-MH battery positive pole slurry, drying, and rolling after adjusting so as to achieve an active material density of 2.52 g/cm³, a thickness of 0.82 mm, and a porosity of 37% as illustrated in FIG. 5, and then cutting to predetermined dimensions.

### (2) Preparation of negative pole plate 3

The negative pole plate 3 was prepared by filling Ni foam having a surface density (grammage) of 320 g/m² with a slurry containing a hydrogen-occluding alloy as an active material, drying, and rolling after adjusting so as to achieve an active material density of 5.07 g/cm³, a thickness of 0.63 mm, and a porosity of 33% as illustrated in FIG. 5, and then cutting to predetermined dimensions.

### (3) Preparation of battery 10

The obtained positive pole plate 1 and negative pole plate 3 were used to make the electrode group 8 with the separator 5 in between. For the separator, a PP nonwoven fabric separator with a thickness of 0.19 mm is used, which is adjusted so as to satisfy the relational expression of the pole plate dimensions of positive and negative pole < separator area < current collector area. For the pair of sealing plates 6, plates with a length L of 1.8 mm were used.

### Embodiment 2

As embodiment 2, a positive pole plate 1 filled with the same quantity of positive pole slurry as embodiment 1 was prepared to have an active material density of 2.46 g/cm³, a thickness of 0.89 mm, and a porosity of 41%. Also, a negative pole plate 3 filled with the same quantity of negative pole slurry as embodiment 1 was prepared to have an active material density of 5.48 g/cm³, a thickness of 0.57 mm, and a porosity of 28%. In embodiment 2, a battery was prepared using the same separator, positive and negative pole cores, and active material slurry compositions as embodiment 1.

### Embodiment 3

As embodiment 3, a positive pole plate 1 filled with the same quantity of positive pole slurry as embodiment 1 was prepared to have an active material density of 2.65 g/cm³, a thickness of 0.78 mm, and a porosity of 33%. Also, a negative pole plate 3 filled with the same quantity of negative pole slurry as embodiment 1 was prepared to have an active material density of 4.75 g/cm³, a thickness of 0.67 mm, and a porosity of 37%. In embodiment 3, a battery was prepared using the same separator, positive and negative pole cores, and active material slurry compositions as embodiment 1.

### Prototype 1

As prototype 1, a positive pole plate 1 filled with the same quantity of positive pole slurry as embodiment 1 was prepared to have an active material density of 2.90 g/cm³, a thickness of 0.69 mm, and a porosity of 24%. Also, a negative pole plate 3 filled with the same quantity of negative pole slurry as embodiment 1 was prepared to have an active material density of 3.91 g/cm³, a thickness of 0.76 mm, and a porosity of 47%. In prototype 1, a battery was prepared using the same separator, positive and negative pole cores, and active material slurry compositions as embodiment 1.

### Prototype 2

As prototype 2, a positive pole plate 1 filled with the same quantity of positive pole slurry as embodiment 1 was prepared to have an active material density of 2.40 g/cm³, a thickness of 0.93 mm, and a porosity of 41.1%. Also, a negative pole plate 3 filled with the same quantity of negative pole slurry as embodiment 1 was prepared to have an active material density of 6.30 g/cm³, a thickness of 0.52 mm, and a porosity of 18%. In prototype 2, a battery was prepared using the same separator, positive and negative pole cores, and active material slurry compositions as embodiment 1.

### Prototype 3

As prototype 3, a positive pole plate 1 filled with the same quantity of positive pole slurry as embodiment 1 was prepared to have an active material density of 2.90 g/cm³, a thickness of 0.69 mm, and a porosity of 24%. Also, a negative pole plate 3 filled with the same quantity of negative pole slurry as embodiment 1 was prepared to have an active material density of 5.10 g/cm³, a thickness of 0.63 mm, and a porosity of 33%. In prototype 3, a battery was prepared using the same separator, positive and negative pole cores, and active material slurry compositions as embodiment 1.

### 2. Evaluation of batteries 10

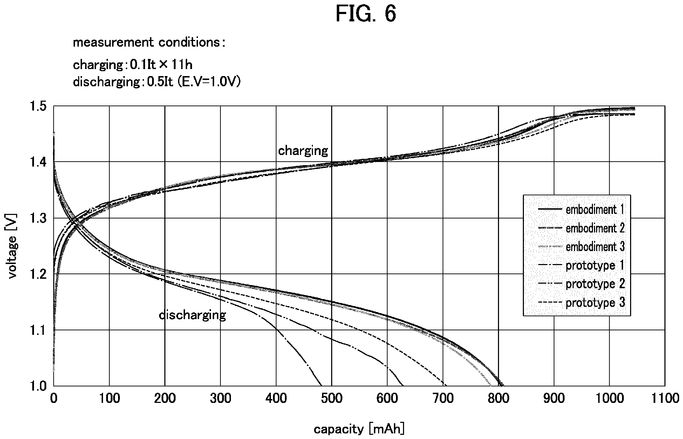

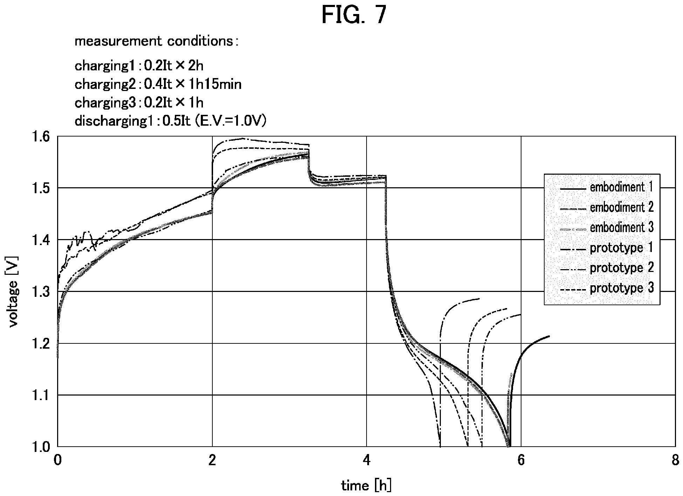

The batteries 10 prepared according to 1. above were subjected to capacity measurement after high-temperature aging and activation. FIG. 5 is a table illustrating the dimensional measurements, the internal resistance after aging, and capacity measurement results for the nickel-metal hydride secondary batteries according to embodiments 1-3 and prototypes 1-3. FIG. 6 is a graph illustrating the capacity measurement results illustrated in FIG. 5, and illustrates the capacity measurement results under predetermined measurement conditions. FIG. 7 is a graph illustrating the capacity measurement results of alkaline storage batteries according to embodiments and prototypes, and illustrates the capacity measurement results under measurement conditions different from those of the capacity measurement illustrated in FIG. 6.

The conditions of the aging illustrated in FIG. 5 were 72 hours in a 40°C environment. As illustrated in FIG. 5, the internal resistance after high-temperature aging was 11.1 mohm for embodiment 1, 12.5 mohm for embodiment 2, and 12.7 mohm for embodiment 3, whereas the internal resistance was 16 mohm for prototype 1, 12.8 mohm for prototype 2, and 15 mohm for prototype 3. In this way, embodiment 1 achieved a lower internal resistance compared to prototypes 1-3. Furthermore, characteristics similar to the battery based on embodiment 1 were obtained by embodiments 2 and 3.

The conditions of the capacity measurement in FIGS. 5 and 6 were 0.1 It × 11 h for charging, and 0.5 It (E.V = 1.0 V) for discharging. Also, the conditions of the capacity measurement in FIG. 7 were 0.2 It × 2 h for charging 1, 0.4 It × 1 h 15 min for charging 2, 0.2 It × 1 h for charging 3, and 0.5 It (E.V = 1.0 V) for discharging. Note that It means the current value for reaching a full charge or full discharge in one hour. Also, E.V = 1.0 V means discharging until the battery voltage goes to 1.0 V.

As illustrated in FIG. 5, in the battery of embodiment 1, a discharge capacity corresponding to approximately 83% of the designed capacity was obtained. Also, in the battery of embodiment 2, a capacity of approximately 81.8% of the designed capacity was obtained, and in the battery of embodiment 3, a capacity of approximately 80.4% of the designed capacity was obtained. In contrast, as illustrated in FIGS. 5 to 7, in the battery of prototype 1, a capacity of approximately 49% of the designed capacity was obtained, and the discharge capacity was lower than the batteries in embodiments 1-3. This is thought to be because the battery of prototype 1 was prepared with a higher density (that is, lower porosity) than the positive pole plates of embodiments 1-3, and therefore the electrolytic solution did not permeate the positive pole plate as readily, and higher resistance occurred as a result of poor liquid circulation. Another factor is thought to that the battery of prototype 1 was prepared with a lower density (that is, higher porosity) than the negative pole plates of embodiments 1-3, and therefore the alloy surface of the negative pole plate aged without cracking during rolling, and sufficient activity was not obtained during activation.

Also, as illustrated in FIGS. 5 to 7, in the battery of prototype 2, a capacity of approximately 69% of the designed capacity was obtained, and the discharge capacity was lower than the batteries in embodiments 1-3. One factor is thought that the battery of prototype 2 was prepared with a lower density (that is, higher porosity) than the positive pole plate of embodiment 1, and therefore activation was not controlled adequately compared to the batteries of embodiments 1 and 3. Another factor is thought that the battery of prototype 2 was prepared with a higher density (that is, lower porosity) than the negative pole plates of embodiments 1-3, and therefore higher resistance occurred due to poor liquid circulation at the negative pole.

Furthermore, as illustrated in FIGS. 5 to 7, in the battery of prototype 3, a capacity of approximately 72% of the designed capacity was obtained, and the discharge capacity was lower than the batteries in embodiments 1-3. In the battery of prototype 3, the sum of the positive pole layer thickness and the negative pole layer thickness was set smaller than the batteries of embodiments 1-3. For this reason, current collecting failure was induced by causing gaps between the positive pole and the positive pole current collector and between the negative pole and the negative pole current collector. It is considered that, thereby, increasing the internal resistance and producing overvoltage, which resulted in a lower discharge capacity.

Referring to FIGS. 6 and 7, at the beginning of charging, the voltage values of the batteries of embodiments 1-3 pass below the voltage values of the batteries of prototypes 1-3. This indicates that the resistance in the batteries of embodiments 1-3 is lower than the resistance in the batteries of prototypes 1-3. Overvoltage caused by high resistance is thought to be occurring in the batteries of prototypes 1-3.

From the above, for the positive pole plate 1, based on the density (2.52 g/cm³) and thickness (0.82 mm) of the positive pole active material particles set forth in embodiment 1, and in consideration of the manufacturing conditions (such as rolling conditions), it is considered preferable to set the density of the positive pole active material particles equal to or greater than 2.40 g/cm³ and less than or equal to 2.75 g/cm³, and set the thickness equal to or greater than 0.75 mm and less than or equal to 0.90 mm. Also, for the negative pole plate 3, based on the density (5.07 g/cm³) and thickness (0.63 mm) of the negative pole active material particles set forth in embodiment 1, and in consideration of the manufacturing conditions (such as rolling conditions), it is considered preferable to set the negative pole active material density equal to or greater than 4.50 g/cm³ and less than or equal to 5.75 g/cm³, and set the thickness equal to or greater than 0.55 mm and less than or equal to 0.70 mm. Moreover, characteristics on a par with the battery based on embodiment 1 were obtained by the batteries based on embodiments 2 and 3, and it is inferred that an effect can be obtained within the range of the dimensional values and densities of the nickel-metal hydride secondary batteries according to embodiments 1-3. Specifically, to obtain a greater effect, for the positive pole plate 1, it is considered more preferable to set the density of the positive pole active material particles equal to or greater than 2.46 g/cm³ and less than or equal to 2.65 g/cm³, and set the thickness equal to or greater than 0.78 mm and less than or equal to 0.89 mm. Also, for the negative pole plate 3, it is considered more preferable to set the negative pole active material density equal to or greater than 4.75 g/cm³ and less than or equal to 5.48 g/cm³, and set the thickness equal to or greater than 0.57 mm and less than or equal to 0.67 mm.

The foregoing describes preferred embodiments of the present invention, but the present invention is not limited to the nickel-metal hydride secondary battery according to above embodiments and includes any and all aspects included in the concept and claims of the present invention.

## Claims

1. An alkaline storage battery (10) comprising:
an electrode group (8) including a flat positive pole plate (1), a flat negative pole plate (3) opposing the positive pole plate (1), and a flat separator (5) disposed between the positive pole plate (1) and the negative pole plate (3);
a flat positive pole current collector (2) that contacts the positive pole plate (1) in the electrode group (8);
a flat negative pole current collector (4) that contacts the negative pole plate (3) in the electrode group (8); and
a pair of sealing plates (6) that extends in the direction that the positive pole plate (1), the negative pole plate (3), and the separator (5) in the electrode group (8) are laminated, is respectively connected to both ends of the positive pole current collector (2) and the negative pole current collector (4), and surrounds the electrode group (8) together with the positive pole current collector (2) and the negative pole current collector (4),
wherein the positive pole plate (1) of the electrode group (8) includes a nickel-based, conductive positive pole base material having a reticulated three-dimensional framework, and a positive pole mixture that is applied to cover the whole surface of the positive pole base material,
wherein the positive pole current collector (2) has a positive pole contact surface (2a) that contacts the whole of a positive pole outer surface (1a) which is the surface of the positive pole plate (1) facing away from the separator (5),
wherein the negative pole plate (3) of the electrode group (8) includes a nickel-based, conductive negative pole base material having a reticulated three-dimensional framework, and a negative pole mixture that is applied to cover the whole surface of the negative pole base material, and
wherein the negative pole current collector (4) has a negative pole contact surface (4a) that contacts the whole of a negative pole outer surface (3a) which is the surface of the negative pole plate (3) facing away from the separator (5),
wherein the electrode group (8) is configured such that the sum of the thicknesses of the positive pole plate (1), the negative pole plate (3), and the separator (5) is equal to or greater than 90% and less than 100% of the length in the direction that the pair of sealing plates (6) is extended.

2. The alkaline storage battery (10) according to claim 1,
wherein the positive pole plate (1) of the electrode group (8) is configured such that the density of positive pole active material particles contained in the positive pole mixture is equal to or greater than 2.40 g/cm3 and less than or equal to 2.75 g/cm3, and
wherein the negative pole plate (3) of the electrode group (8) is configured such that the density of negative pole active material particles contained in the negative pole mixture is equal to or greater than 4.50 g/cm3 and less than or equal to 5.75 g/cm3.

3. The alkaline storage battery (10) according to claim 2,
wherein the positive pole plate (1) of the electrode group (8) is configured such that the density of positive pole active material particles contained in the positive pole mixture is equal to or greater than 2.46 g/cm3 and less than or equal to 2.65 g/cm3, and
wherein the negative pole plate (3) of the electrode group (8) is configured such that the density of negative pole active material particles contained in the negative pole mixture is equal to or greater than 4.75 g/cm3 and less than or equal to 5.48 g/cm3.

4. A alkaline storage battery pack (20) comprising:
at least two of the electrode groups (8) according to one of the preceding claims, the at least two electrode groups (8) being laminated in the direction the positive pole plate (1), the negative pole plate (3), and the separator (5) are laminated;
a flat positive pole current collector (2) that contacts the positive pole plate (1) of one electrode group (8) among the electrode groups (8), the positive pole current collector (2) having a positive pole contact surface (2a) that contacts the whole of a positive pole outer surface (1a) which is the surface of the positive pole plate (1) facing away from the separator (5);
a flat negative pole current collector (4) that contacts the negative pole plate (3) of another electrode group (8) among the electrode groups (8), the negative pole current collector (4) having a negative pole contact surface (4a) that contacts the whole of a negative pole outer surface (3a) which is the surface of the negative pole plate (3) facing away from the separator (5);
a flat shared electrode plate (7) which is disposed between respective electrode groups (8) among the at least two electrode groups (8), and which contacts both the positive pole plate (1) and the negative pole plate (3) of the respective electrode groups (8) adjacent to each other; and
at least two pairs of sealing plates (6) that extend in the direction that the positive pole plate (1), the negative pole plate (3), and the separator (5) in the respective electrode groups (8) are laminated, are respectively connected to both ends of the positive pole current collector (2), both ends of the shared electrode plate (7), and both ends of the negative pole current collector (4), and surround each of the electrode groups (8) together with the positive pole current collector (2), the shared electrode plate (7), and the negative pole current collector (4).

## Patentansprüche

1. Alkali-Speicherbatterie (10), umfassend:
eine Elektrodengruppe (8) mit einer flachen Pluspolplatte (1), einer der Pluspolplatte (1) gegenüberliegenden flachen Minuspolplatte (3) und einem flachen Separator (5), der zwischen der Pluspolplatte (1) und der Minuspolplatte (3) angeordnet ist;
einen flachen positiven Polstromabnehmer (2), der die positive Polplatte (1) in der Elektrodengruppe (8) berührt;
einen flachen negativen Polstromabnehmer (4), der die negative Polplatte (3) in der Elektrodengruppe (8) berührt; und
ein Paar Dichtungsplatten (6), das sich in der Richtung erstreckt, in der die positive Polplatte (1), die negative Polplatte (3) und der Separator (5) in der Elektrodengruppe (8) laminiert sind, jeweils mit beiden Enden des positiven Polstromabnehmers (2) und des negativen Polstromabnehmers (4) verbunden ist und die Elektrodengruppe (8) zusammen mit dem positiven Polstromabnehmer (2) und dem negativen Polstromabnehmer (4) umgibt,
wobei die positive Polplatte (1) der Elektrodengruppe (8) ein leitfähiges Grundmaterial für den positiven Pol auf Nickelbasis mit einem netzartigen dreidimensionalen Gerüst und eine positive Polmischung umfasst, die so aufgebracht ist, dass sie die gesamte Oberfläche des Grundmaterials für den positiven Pol bedeckt,
wobei der positive Polstromabnehmer (2) eine positive Polkontaktfläche (2a) aufweist, die die gesamte positive Polaußenfläche (1a) berührt, die die vom Separator (5) abgewandte Oberfläche der positiven Polplatte (1) darstellt,
wobei die Negativpolplatte (3) der Elektrodengruppe (8) ein nickelbasiertes, leitfähiges Negativpol-Grundmaterial mit einem netzartigen dreidimensionalen Gerüst und eine Negativpolmischung umfasst, die so aufgebracht ist, dass sie die gesamte Oberfläche des Negativpol-Grundmaterials bedeckt, und
wobei der negative Polstromabnehmer (4) eine Negativpol-Kontaktfläche (4a) aufweist, die die gesamte Negativpol-Außenfläche (3a) berührt, bei der es sich um die vom Separator (5) abgewandte Oberfläche der Negativpolplatte (3) handelt,
wobei die Elektrodengruppe (8) so konfiguriert ist, dass die Summe der Dicken der Pluspolplatte (1), der Minuspolplatte (3) und des Separators (5) gleich oder größer als 90 % und kleiner als 100 % der Länge in der Richtung ist, in der sich das Paar von Dichtungsplatten (6) erstreckt.

2. Alkali-Speicherbatterie (10) nach Anspruch 1,
wobei die positive Polplatte (1) der Elektrodengruppe (8) so ausgebildet ist, dass die Dichte der in der positiven Polmischung enthaltenen aktiven Materialpartikel des positiven Pols gleich oder größer als 2,40 g/cm³ und kleiner oder gleich 2,75 g/cm³ ist, und
wobei die negative Polplatte (3) der Elektrodengruppe (8) so ausgebildet ist, dass die Dichte der in der negativen Polmischung enthaltenen Partikel des aktiven Materials des negativen Pols gleich oder größer als 4,50 g/cm³ und kleiner oder gleich 5,75 g/cm³ ist.

3. Alkali-Speicherbatterie (10) nach Anspruch 2,
wobei die Pluspolplatte (1) der Elektrodengruppe (8) so ausgebildet ist, dass die Dichte der in der Pluspolmischung enthaltenen Partikel des Pluspol-Aktivmaterials gleich oder größer als 2,46 g/cm³ und kleiner oder gleich 2,65 g/cm³ ist, und
wobei die negative Polplatte (3) der Elektrodengruppe (8) so ausgebildet ist, dass die Dichte der in der negativen Polmischung enthaltenen Partikel des aktiven Materials des negativen Pols gleich oder größer als 4,75 g/cm³ und kleiner oder gleich 5,48 g/cm³ ist.

4. Alkali-Speicherbatterieeinheit (20), umfassend:
mindestens zwei der Elektrodengruppen (8) gemäß einem der vorstehenden Ansprüche, wobei die mindestens zwei Elektrodengruppen (8) in der Richtung laminiert sind, in der die positive Polplatte (1), die negative Polplatte (3) und der Separator (5) laminiert sind;
einen flachen positiven Polstromabnehmer (2), der die positive Polplatte (1) einer der Elektrodengruppen (8) unter den Elektrodengruppen (8) kontaktiert, wobei der positive Polstromabnehmer (2) eine positive Polkontaktfläche (2a) aufweist, die die gesamte positive Polaußenfläche (1a) kontaktiert, die die vom Separator (5) abgewandte Oberfläche der positiven Polplatte (1) darstellt;
einen flachen negativen Polstromabnehmer (4), der die Negativpolplatte (3) einer anderen Elektrodengruppe (8) unter den Elektrodengruppen (8) berührt, wobei der negative Polstromabnehmer (4) eine Negativpol-Kontaktfläche (4a) aufweist, die die gesamte Negativpol-Außenfläche (3a) berührt, die die vom Separator (5) abgewandte Fläche der Negativpolplatte (3) ist;
eine flache gemeinsame Elektrodenplatte (7), die zwischen den jeweiligen Elektrodengruppen (8) unter den mindestens zwei Elektrodengruppen (8) angeordnet ist und sowohl die positive Polplatte (1) als auch die negative Polplatte (3) der jeweiligen, nebeneinander liegenden Elektrodengruppen (8) berührt; und
mindestens zwei Paare von Dichtungsplatten (6), die sich in der Richtung erstrecken, in der die positive Polplatte (1), die negative Polplatte (3) und der Separator (5) in den jeweiligen Elektrodengruppen (8) laminiert sind, jeweils mit beiden Enden des positiven Polstromabnehmers (2), beiden Enden der gemeinsamen Elektrodenplatte (7) und beiden Enden des negativen Polstromabnehmers (4) verbunden sind, und jede der Elektrodengruppen (8) zusammen mit dem positiven Polstromabnehmer (2), der gemeinsamen Elektrodenplatte (7) und dem negativen Polstromabnehmer (4) umgeben.

## Revendications

1. Batterie de stockage alcaline (10), comprenant :
un groupe d'électrodes (8) ayant une plaque de pôle positif plane (1), une plaque de pôle négatif plane (3) située en face de la plaque de pôle positif (1), et un séparateur plan (5) disposé entre la plaque de pôle positif (1) et la plaque de pôle négatif (3) ;
un collecteur de courant de pôle positif plan (2) en contact avec la plaque de pôle positif (1) dans le groupe d'électrodes (8) ;
un collecteur de courant de pôle négatif plan (4) en contact avec la plaque de pôle négatif (3) dans le groupe d'électrodes (8) ; et
une paire de plaques d'étanchéité (6) s'étendant dans la direction dans laquelle la plaque de pôle positif (1), la plaque de pôle négatif (3) et le séparateur (5) sont empilés dans le groupe d'électrodes (8), et qui est relié à une extrémité respective du collecteur de courant de pôle positif (2) et du collecteur de courant de pôle négatif (4) et, conjointement avec le collecteur de courant de pôle positif (2) et le collecteur de courant de pôle négatif (4), entoure le groupe d'électrodes (8),
la plaque de pôle positif (1) du groupe d'électrodes (8) comprenant un matériau de base de pôle positif conducteur à base de nickel, doté d'une structure tridimensionnelle en forme de réseau, ainsi qu'un mélange de pôle positif appliqué de manière à recouvrir toute la surface du matériau de base de pôle positif,
le collecteur de courant de pôle positif (2) ayant une surface de contact de pôle positif (2a) en contact avec toute la surface extérieure de pôle positif (1a), qui est la surface de la plaque de pôle positif (1) opposée au séparateur (5),
la plaque de pôle négatif (3) du groupe d'électrodes (8) comprenant un matériau de base de pôle positif conducteur à base de nickel, doté d'une structure tridimensionnelle en forme de réseau, ainsi qu'un mélange de pôle négatif appliqué de manière à recouvrir toute la surface du matériau de base de pôle négatif, et
le collecteur de courant de pôle négatif (4) ayant une surface de contact de pôle négatif (4a) en contact avec toute la surface extérieure de pôle négatif (3a), qui est la surface de la plaque de pôle négatif (3) opposée au séparateur (5),
le groupe d'électrodes (8) étant conçu de telle sorte que la somme des épaisseurs de la plaque de pôle positif (1), de la plaque de pôle négatif (3) et du séparateur (5) soit égale ou supérieure à 90 % et inférieure à 100 % de la longueur dans la direction dans laquelle s'étend la paire de plaques d'étanchéité (6).

2. La batterie de stockage alcaline (10) selon la revendication 1,
sachant que la plaque de pôle positif (1) du groupe d'électrodes (8) est conçue de telle sorte que la densité des particules de matériau actif de pôle positif contenues dans le mélange de pôle positif soit égale ou supérieure à 2,40 g/cm³ et inférieure ou égale à 2,75 g/cm³, et
sachant que la plaque de pôle négatif (3) du groupe d'électrodes (8) est conçue de telle sorte que la densité des particules de matériau actif de pôle négatif contenues dans le mélange de pôle négatif soit égale ou supérieure à 4,50 g/cm³ et inférieure ou égale à 5,75 g/cm³.

3. La batterie de stockage alcaline (10) selon la revendication 2,
sachant que la plaque de pôle positif (1) du groupe d'électrodes (8) est conçue de telle sorte que la densité des particules de matériau actif de pôle positif contenues dans le mélange de pôle positif soit égale ou supérieure à 2,46 g/cm³ et inférieure ou égale à 2,65 g/cm³, et
sachant que la plaque de pôle négatif (3) du groupe d'électrodes (8) est conçue de telle sorte que la densité des particules de matériau actif de pôle négatif contenues dans le mélange de pôle négatif soit égale ou supérieure à 4,75 g/cm³ et inférieure ou égale à 5,48 g/cm³.

4. Bloc (20) de batteries alcalines de stockage, comprenant :
au moins deux groupes d'électrodes (8) selon l'une des revendications précédentes, lesdits au moins deux groupes d'électrodes (8) étant empilés dans la direction dans laquelle la plaque de pôle positif (1), la plaque de pôle négatif (3) et le séparateur (5) sont empilés ;
un collecteur de courant de pôle positif plan (2) en contact avec la plaque de pôle positif (1) d'un groupe d'électrodes (8) parmi les groupes d'électrodes (8), le collecteur de courant de pôle positif (2) ayant une surface de contact de pôle positif (2a) en contact avec toute la surface extérieure de pôle positif (1a), qui est la surface de la plaque de pôle positif (1) opposée au séparateur (5) ;
un collecteur de courant de pôle négatif (4) plan en contact avec la plaque de pôle négatif (3) d'un autre groupe d'électrodes (8) parmi les groupes d'électrodes (8), le collecteur de courant de pôle négatif (4) ayant une surface de contact de pôle négatif (4a) en contact avec toute la surface extérieure de pôle négatif (3a), qui est la surface de la plaque de pôle négatif (3) opposée au séparateur (5) ;
une plaque d'électrode commune plane (7) disposée entre des groupes d'électrodes respectifs (8) parmi lesdits au moins deux groupes d'électrodes (8) et en contact à la fois avec la plaque de pôle positif (1) et la plaque de pôle négatif (3) de groupes d'électrodes adjacents respectifs (8) ; et
au moins deux paires de plaques d'étanchéité (6) s'étendant dans la direction dans laquelle la plaque de pôle positif (1), la plaque de pôle négatif (3) et le séparateur (5) sont empilés dans les groupes d'électrodes respectifs (8), qui sont respectivement reliées aux deux extrémités du collecteur de courant de pôle positif (2), aux deux extrémités de la plaque d'électrode commune (7) et aux deux extrémités du collecteur de courant de pôle négatif (4) et qui, conjointement avec le collecteur de courant de pôle positif (2), la plaque d'électrode commune (7) et le collecteur de courant de pôle négatif (4), entourent chacun des groupes d'électrodes (8).
